# FASCICULE DE BREVET EUROPEEN

(11) **EP 0 931 461 B1**
(45) Date de publication et mention de la délivrance du brevet: **31.03.2004**
(21) Numéro de dépôt: 98400107.3
(22) Date de dépôt: 21.01.1998
(51) Int. Cl.: A23G 3/00, A23G 3/20

(54) **Produit associant un biscuit, une couche croquante et un fourrage humide et son procédé de fabrication**
Produkt mit Krokantschicht und feuchter Füllmasse und Verfahren zu dessen Herstellung
Product combining a cruchy coating and a moist filling and method for its preparation

(43) Date de publication de la demande: 28.07.1999
(73) Titulaire: LU France, 91130 Ris Orangis (FR)
(72) Inventeur: Tansens, Luc, 2200 Herentals (BE)
(74) Mandataire: Jacquard, Philippe Jean-Luc

(56) Documents cités:
- EP-A- 0 064 155
- EP-A- 0 733 308
- WO-A-95/32633
- FR-A- 2 532 155

## Description

La présente invention a pour objet un produit mettant en oeuvre un biscuit, notamment de type génoise moelleuse, combiné à une coquille de chocolat et à un fourrage humide.

Un biscuit comportant une couche de gelée d'enrobage et une couche d'enrobage en chocolat est décrit dans le document FR2532155A.

Le document EP733308A concerne une confiserie glacée présentant une gaufrette enrobée de chocolat et une composition glacée qui sont placées dans une coque en chooolat.

Des produits présentant une combinaison génoise-fourrage-chocolat existent déjà. Il s'agit par exemple du produit commercialisé par LU sous la marque PIM'S. Ces produits sont caractérisés par une génoise d'un côté, et une mince couche de chocolat enrobée de l'autre côté, répartie finement mais irrégulièrement sur le fourrage.

Dans ce type de produit, le chocolat est peu croquant et il n'existe pratiquement pas de contraste entre le moelleux de la génoise et le croquant du chocolat, et surtout, le croquant du chocolat, après un certain temps, tend à diminuer, voire à disparaître complètement. Concernant l'aspect, on constate parfois des défauts au niveau du chocolat, comme un mauvais recouvrement (trous), ou bien encore une transparence localisée de la couche de chocolat, etc.

En particulier, l'épaisseur de la couche mince de chocolat n'est pas homogène. Elle peut atteindre localement plus de 1 mm, mais elle peut par endroits n'être que de 0,3 mm.

Le but de la présente invention est de concevoir une génoise présentant une combinaison du type génoise-fourrage-chocolat telle qu'indiquée ci-dessus, mais dotée d'une meilleure finition, sur le plan esthétique et sensoriel, spécialement sur le plan du chocolat, et ne présentant pas les problèmes et les inconvénients mentionnés ci-dessus.

Cet objectif est atteint grâce à un produit associant un biscuit moelleux, une couche croquante de chocolat obtenu par un mélange à base de sucre et d'au moins une matière grasse, et un fourrage humide emprisonné entre le biscuit et la couche croquante caractérisé en ce que la couche croquante est une couche moulée et cristallisée.

La combinaison de ces éléments donne un produit ayant des propriétés spécifiques, qui peut être la sensation d'une génoise moelleuse qui contraste avec le croquant du chocolat, avec entre les deux un fourrage onctueux, d'un goût donné.

Un procédé de fabrication de ce produit est caractérisé par les étapes suivantes :
a) on moule tout d'abord une couche croquante d'un mélange comportant du sucre et au moins une matière grasse, notamment du chocolat ou du chocolat fantaisie,
b) après cristallisation complète de ladite couche croquante, on forme ledit produit en emprisonnant le fourrage humide entre la couche croquante et le biscuit.

L'étape b comporte avantageusement les sous-étapes suivantes :
b₁) on dépose sur ladite couche un fourrage humide, après cristallisation complète de la couche croquante
b₂) on dispose un biscuit, de préférence un biscuit moelleux tel qu'une génoise de manière à emprisonner le fourrage humide entre la couche croquante et le biscuit.

Selon un mode de réalisation préféré, à l'étape b on fait fondre localement au moins une partie du pourtour du bord de la couche croquante, et on applique ensuite le biscuit sur ledit bord de manière à solidariser ensemble la couche croquante et le biscuit, ce qui permet de solidariser et/ou de sceller ensemble la couche croquante et le biscuit.

Cette couche moulée et cristallisée a moins tendance à absorber l'humidité qu'une couche d'enrobage qui, selon l'art antérieur, est déposée sur un fourrage de contour déterminé, par exemple un fourrage gélifié, notamment par trempage dans un bain de chocolat. Selon l'art antérieur, lors de la cristallisation du chocolat, l'humidité du fourrage tend à pénétrer la couche de chocolat non encore cristallisée avec une épaisseur de pénétration qui est une proportion notable de l'épaisseur nominale de la couche.

Selon l'invention la couche croquante est cristallisée avant d'être mise en contact avec le fourrage humide, et de ce fait, la couche croquante, par exemple une coquille de chocolat, est plus croquante. En outre, elle reste plus longtemps croquante et le produit se conserve plus longtemps.

La dureté de la couche croquante réalisée selon l'invention étant supérieure à celle d'une couche croquante obtenue selon l'art antérieur, le contraste qui peut être recherché entre le moelleux d'un biscuit moelleux et le croquant d'une couche mince et croquante est nettement plus élevé que dans l'art antérieur, et il se maintient mieux dans le temps.

D'autres caractéristiques et avantages de l'invention ressortiront de la description détaillée qui suit, en se référant aux dessins annexés, donnés à titre d'exemple non limitatif, dans lesquels :

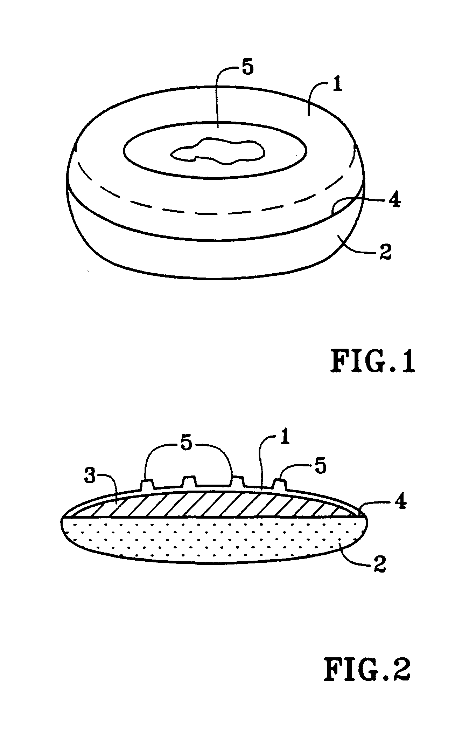

- la figure 1 représente une vue en perspective d'un produit selon l'invention
- la figure 2 représente une coupe transversale de la figure 1.

Si l'on se réfère aux dessins, le produit est composé d'une coquille de chocolat 1 formée d'une soucoupe creuse dont le pourtour est délimité par un bord 4. Cette coquille 1 possède, sur toute sa surface, une épaisseur déterminée qui est ou non constante, par exemple de l'ordre d'1mm. Le chocolat peut être choisi parmi les chocolats normaux, chocolats au lait, chocolats blancs, chocolats spéciaux avec noix de coco, amandes ou noisettes, chocolat fantaisie (pâte à glacer) ou tous autres mélanges de sucres et de matières grasses.

Une sensation de croquant optimale peut être obtenue avec une coquille dont l'épaisseur est avantageusement comprise entre 0,5 mm et 2 mm et de préférence entre 0,5 mm et 1 mm, dans la région de perception du croquant.

Un fourrage humide 3 est déposé dans la coquille 1. On utilise de préférence un fourrage à base de fruits ou d'un mélange de fruits, comme l'orange, la framboise, les cerises, les myrtilles, les prunes, les ananas, etc. Il est également possible d'utiliser d'autres fourrages, par exemple le caramel, la guimauve ("marshmallow"), la mousse au chocolat et plus généralement tout fourrage humide susceptible de restituer ou d'exsuder de l'humidité de manière préjudiciable à une couche de chocolat.

Une génoise 2 par exemple d'environ 8 à 9 mm d'épaisseur est placée sur la coquille 1 et le fourrage 3. Cette génoise 2 peut être constituée de diverses matières premières, telles que le blé, l'orge, etc., avec l'addition éventuelle d'éléments agréables des points de vue organoleptique et/ou nutritionnel, comme les oeufs, les sucres normaux ou spéciaux, du cacao, certaines huiles, des émulsifiants, des agents d'aromatisation et/ou des sels.

Les caractéristiques de l'invention sont déterminées par la couche 1, en chocolat, qui est préalablement moulée et cristallisée. De ce fait, la couche 1 en chocolat a moins tendance à absorber l'humidité du fourrage, de sorte qu'elle reste plus longtemps croquante et que le produit se conserve plus longtemps. De plus, le moulage de la couche 1 donne la possibilité d'introduire un dessin 5 en creux ou en relief dans le moule, afin d'obtenir un aspect plus esthétique du côté de la couche 1.

Le produit décrit ci-dessus peut être fabriqué par un procédé dont un mode de réalisation préférentiel est donné ci-après.

Tout d'abord, la couche 1, par exemple en chocolat, est moulée et refroidie jusqu'à complète cristallisation.

Ensuite, le fourrage 3 est dosé dans la coquille 1 de chocolat qui a la forme d'une cavité et dont la concavité est tournée vers le haut. Ceci permet d'utiliser au choix toutes sortes de fourrages : liquides, épais, visqueux, solides, etc., et d'ajouter d'autres ingrédients, comme des noix, des morceaux de fruits, etc.

Le biscuit 2, par exemple une génoise moelleuse, en combinaison avec la coquille, assure un recouvrement complet du fourrage 3. Ainsi, les fourrages liquides ou coulants (par exemple un sirop) ne peuvent pas sortir du produit. L'adhésion de la coquille, par exemple en chocolat, à la génoise peut être obtenue grâce à la fonte du bord 4 de la coquille 1, juste avant la dépose de la génoise 2. De ce fait, le scellage de ces deux éléments 1 et 2 est parfait. En vue de faciliter le scellage, la coquille peut présenter au voisinage du bord 4 une épaisseur de l'ordre de 2 mm.

La combinaison des éléments mentionnés dans l'exemple ci-dessus permet d'obtenir un produit composé d'une génoise moelleuse 2, d'un fourrage onctueux 3 d'un goût spécifique et d'une coquille croquante 1 en chocolat.

La forme de soucoupe creuse de la coquille 1 permet de contenir un fourrage humide 3 avant la mise en place du biscuit de base 2, notamment une génoise.

La réalisation de cette soucoupe 1 par moulage permet de conserver son croquant sur une plus longue période. En effet, la couche croquante 1 à base de sucre et d'au moins une matière grasse est totalement cristallisée avant que ne soit déposé sur elle le fourrage humide 3, et de ce fait, il n'est plus possible que l'humidité du fourrage 3 pénètre la coquille 1 au cours de sa cristallisation. De ce fait, la couche 1 est plus dure, et donc plus croquante, et ses caractéristiques sont plus stables dans le temps.

Alternativement, la couche 1 est plate et le fourrage 3 est logé dans le biscuit moelleux 2.

Cette réalisation par moulage donne également la possibilité de réaliser un ou plusieurs motifs de forme définie 5 en creux et/ou en relief dans la coquille 1, par exemple un ou plusieurs motifs décoratifs et/ou une ou plusieurs inscriptions.

La base 2 de génoise moelleuse permet d'éviter que le fourrage humide ne sorte du produit.

La présence d'une coquille cristallisée 1 permet en particulier d'utiliser des fourrages liquides ou coulants.

Le procédé selon l'invention permet également d'utiliser des fourrages plus fluides que dans l'art antérieur, ce qui améliore la sensation lors de la dégustation du produit. Il permet également de conférer à la coquille un contour désiré et/ou une forme définie qui peut être différente de celle du biscuit, par exemple la forme d'un fruit (poire, orange, etc...).

Un test en aveugle réalisé de manière interne a montré qu'un produit réalisé selon l'invention était jugé supérieur par 68% des membres du panel en ce qui concerne le croquant du chocolat vis-à-vis d'un produit concurrent fabriqué par la Société GRIESSON.

De même, un autre test interne réalisé par un jury entraîné de 20 personnes, a montré une différence significative sur le critère "croquant du chocolat" entre le produit PIM'S Framboise Standard de LU et un produit fourré à la framboise réalisé selon l'invention, à l'avantage du produit selon l'invention.

## Revendications

1. Produit associant un biscuit moelleux, une couche croquante, et un fourrage humide emprisonné entre le biscuit moelleux et la couche croquante, **caractérisé en ce que** le fourrage humide (3) est d'un type susceptible de restituer ou d'exsuder de l'humidité de manière préjudiciable à une couche de chocolat, et **en ce que** la couche croquante (1) est en un chocolat obtenu par un mélange de sucre et de matière grasse qui est moulé et cristallisé, de sorte que la couche croquante (1) présente un croquant qui contraste avec le moelleux du biscuit moelleux (2), et que ce croquant se conserve au cours du temps.

2. Produit selon la revendication 1 **caractérisé en ce que** la couche croquante (1) est une coquille à l'intérieur de laquelle est disposé le fourrage humide (3).

3. Produit selon une des revendications 1 ou 2, **caractérisé en ce que** la couche croquante moulée (1) est en chocolat ou en chocolat fantaisie (pâte à glacer).

4. Produit selon la revendication 3, **caractérisé en ce que** la couche croquante moulée (1) est en un chocolat choisi parmi le chocolat noir, le chocolat au lait, le chocolat blanc, le chocolat à la noix de coco et/ou aux amandes et/ou aux noisettes.

5. Produit selon une des revendications précédentes, **caractérisé en ce que** le fourrage humide (3) est à base de fruit ou d'un mélange de fruits notamment d'orange, de framboise, de cerise, de myrtille, de prune, d'ananas.

6. Produit selon une des revendications 1 à 5, **caractérisé en ce que** le fourrage humide (3) est du caramel ou de la guimauve ou de la mousse au chocolat.

7. Produit selon une des revendications précédentes, **caractérisé en ce que** la couche croquante moulée (1) présente au moins un motif (5) en creux et/ou en relief.

8. Produit selon une des revendications précédentes **caractérisé en ce que** la couche croquante présente une forme et/ou un contour différent de celui du biscuit.

9. Procédé de fabrication d'un produit selon une des revendications précédentes **caractérisé en ce qu'**il comporte les étapes suivantes :
a) mouler une dite couche croquante (1) en chocolat obtenu par un mélange de sucre et d'au moins une matière grasse
b) après cristallisation complète de la couche croquante (1), former ledit produit en emprisonnant ledit fourrage humide (3) entre la couche croquante (1) et le biscuit moelleux (2).

10. Procédé selon la revendication 9, **caractérisé en ce que** ladite étape b de formation du produit comporte les sous-étapes suivantes :
b₁) déposer sur ladite couche (1) une fois cristallisée un fourrage humide (3),
b₂) déposer un biscuit (2) de manière à emprisonner le fourrage humide (3) entre la couche croquante (1) et le biscuit (2).

11. Procédé selon une des revendications 9 ou 10, **caractérisé en ce qu'**à l'étape b, on fait fondre localement au moins une partie du pourtour du bord (4) de la couche croquante (1), et **en ce qu'**on applique ensuite le biscuit moelleux (2) sur ledit bord (4) de manière à solidariser ensemble la couche croquante (1) et le biscuit moelleux (2).

12. Procédé selon une des revendications 9 ou 10, **caractérisé en ce que** la couche croquante (1) est une coquille et **en ce que** lors de la sous-étape b₁, la coquille est disposée avec sa concavité tournée vers le haut pour recevoir un fourrage humide liquide ou pâteux.

## Patentansprüche

1. Erzeugnis, das einen weichen Biskuit, eine knusprige Schicht und eine feuchte Füllung, die zwischen dem feuchten Biskuit und der knusprigen Schicht eingeschlossen ist, vereint, **dadurch gekennzeichnet, dass** die feuchte Füllung (3) von einer Art ist, die in der Lage ist, Feuchtigkeit in einer solchen Weise, die sich nachteilig auf eine Schokoladenschicht auswirkt, wieder abzugeben oder abzusondern, und dass die knusprige Schicht (1) aus einer Schokolade, die durch eine Mischung von Zucker und Fettstoff erhalten wird, die in einer solchen Weise gegossen und kristallisiert ist, dass die knusprige Schicht (1) eine Knusprigkeit hat, die mit der Weichheit des weichen Biskuits (2) kontrastiert, und dass diese Knusprigkeit im Laufe der Zeit erhalten bleibt.

2. Erzeugnis nach Anspruch 1, **dadurch gekennzeichnet, dass** die knusprige Schicht eine Muschel ist, in deren Inneren sich die feuchte Füllung (3) befindet.

3. Erzeugnis nach einem der Ansprüche 1 und 2, **dadurch gekennzeichnet, dass** die gegossene knusprige Schicht (1) aus Schokolade oder Zierschokolade (Glasurmasse) ist.

4. Erzeugnis nach Anspruch 3, **dadurch gekennzeichnet, dass** die gegossene knusprige Schicht (1) aus einer Schokolade ist, die aus Bitterschokolade, Milchschokolade, weißer Schokolade, Kokosnussschokolade und/oder Mandelschokolade und/oder Nussschokolade ausgewählt wurde.

5. Erzeugnis nach einem der vorhergehenden Ansprüche, **dadurch gekennzeichnet, dass** die feuchte Füllung (3) auf Früchten oder einer Mischung von Früchten basiert, vor allem Orange, Himbeere, Kirsche, Heidelbeere, Pflaume, Ananas.

6. Erzeugnis nach einem der Ansprüche 1 bis 5, **dadurch gekennzeichnet, dass** die feuchte Füllung (3) aus Karamel oder Schaumzucker oder Mousse au chocolat ist.

7. Erzeugnis nach einem der vorhergehenden Ansprüche, **dadurch gekennzeichnet, dass** die gegossene knusprige Schicht (1) zumindest ein vertieftes und/oder erhabenes Motiv (5) aufweist.

8. Erzeugnis nach einem der vorhergehenden Ansprüche, **dadurch gekennzeichnet, dass** die knusprige Schicht eine Form und/oder einen Umriss hat, der sich von dem des Biskuits unterscheidet.

9. Verfahren zur Herstellung eines Erzeugnisses nach einem der vorhergehenden Ansprüche, **dadurch gekennzeichnet, dass** dieses die folgenden Schritte aufweist:
a) Gießen einer genannten knusprigen Schicht (1) aus Schokolade, die durch eine Mischung von Zucker und zumindest einem Fettstoff erhalten wird,
b) nach der vollständigen Kristallisierung der knusprigen Schicht (1) Formen des Produkts, indem die feuchte Füllung (3) zwischen der knusprigen Schicht (1) und dem weichen Biskuit (2) eingeschlossen wird,

10. Verfahren nach Anspruch 9, **dadurch gekennzeichnet, dass** der Schritt b der Formung des Erzeugnisses die folgenden Unterschritte aufweist:
b₁) Aufbringen einer feuchten Füllung (3) auf die Schicht (1) sobald diese kristallisiert ist,
b₂) Aufbringen eines Biskuits (2) in einer solchen Weise, dass die feuchte Füllung (3) zwischen der knusprigen Schicht (1) und dem Biskuit (2) eingeschlossen wird.

11. Verfahren nach einem der Ansprüche 9 und 10, **dadurch gekennzeichnet, dass** in Schritt b zumindest ein Teil des Umfangs der Kante (4) der knusprigen Schicht (1) lokal geschmolzen wird, und dass anschließend der feuchte Biskuit (2) auf die Kante (4) in einer solchen. Weise aufgebracht wird, dass die knusprige Schicht (1) und der feuchte Biskuit (2) fest miteinander verbunden sind.

12. Verfahren nach einem der Ansprüche 9 und 10, **dadurch gekennzeichnet, dass** die knusprige Schicht (1) eine Muschel ist und dass im Unterschritt b₁ 'die Muschel in einer solchen Weise angeordnet ist, dass ihre Eintiefung nach oben gedreht ist, um eine flüssige oder zähflüssige feuchte Füllung aufzunehmen.

## Claims

1. Product which combines a soft biscuit, a crunchy layer and a moist filling trapped between the soft biscuit and the crunchy layer, **characterised in that** the moist filling (3) is of a type likely to release or exude moisture in a manner which will adversely affect a layer of chocolate, and **in that** the crunchy layer (1) is of a chocolate obtained by mixing sugar and fat which is moulded and crystallised, so that the crunchy layer (1) has a crunchiness which contrasts with the softness of the soft biscuit (2), and **in that** this crunchiness is retained over time.

2. Product according to claim 1, **characterised in that** the crunchy layer (1) is a shell inside which is placed the moist filling (3).

3. Product according to one of claims 1 and 2, **characterised in that** the moulded crunchy layer (1) is of chocolate or imitation chocolate (icing).

4. Product according to claim 3, **characterised in that** the moulded crunchy layer (1) is of a chocolate selected from dark chocolate, milk chocolate, white chocolate, coconut chocolate and/or almond and/or hazelnut chocolate.

5. Product according to one of the preceding claims, **characterised in that** the moist filling (3) is based on fruit or a mixture of fruits, particularly orange, raspberry, cherry, bilberry, plum, pineapple.

6. Product according to one of claims 1 to 5, **characterised in that** the moist filling (3) is caramel or marshmallow or chocolate mousse.

7. Product according to one of the preceding claims, **characterised in that** the moulded crunchy layer (1) has at least one indented and/or raised design (5).

8. Product according to one of the preceding claims, **characterised in that** the crunchy layer has a different shape and/or outline from the biscuit.

9. Process for producing a product according to one of the preceding claims, **characterised in that** it comprises the following steps:
a) moulding a said crunchy layer (1) of chocolate obtained by mixing sugar and at least one fat
b) after total crystallisation of the crunchy layer (1), forming said product by trapping said moist filling (3) between the crunchy layer (1) and the soft biscuit (2).

10. Process according to claim 9, **characterised in that** said step b of forming the product comprises the following subsidiary steps:
b₁) placing a moist filling (3) on said layer (1) once it has crystallised,
b₂) placing a biscuit (2) in such a way as to trap the moist filling (3) between the crunchy layer (1) and the biscuit (2).

11. Process according to one of claims 9 and 10, **characterised in that** in step b, at least part of the periphery of the edge (4) of the crunchy layer (1) is melted locally, and **in that** the soft biscuit (2) is then applied to said edge (4) so as to join the crunchy layer (1) and soft biscuit (2) together.

12. Process according to one of claims 9 and 10, **characterised in that** the crunchy layer (1) is a shell and **in that** during subsidiary step b₁ the shell is placed with its concavity facing upwards to accommodate a moist filling in liquid or paste form.
